# EUROPEAN PATENT APPLICATION

(11) **EP 2 863 710 A2**
(43) Date of publication of application: **22.04.2015**
(21) Application number: 14159159.4
(22) Date of filing: 12.03.2014
(51) Int. Cl.: H05B 33/08

(54) **Power supply device and luminaire**

(30) Priority: 25.09.2013 JP 2013198451
(71) Applicant: Toshiba Lighting & Technology Corporation, Yokosuka-shi Kanagawa 237-8510 (JP)
(72) Inventor: Kitamura, Noriyuki, Kanagawa, 237-8510 (JP); Miura, Yohei, Kanagawa, 237-8510 (JP); Otake, Hirokazu, Kanagawa, 237-8510 (JP); Takahashi, Yuji, Kanagawa, 237-8510 (JP)
(74) Representative: Willquist, Sofia Ellinor

(57) **Abstract**

According to one embodiment, a power supply device (3, 57) includes a conductive first mounting board (32), a first switching element (9), a current control element (10), and a second switching element (11). The first switching element (9) is mounted on the first mounting board (32). The current control element (10) is mounted on the first mounting board (32), includes a main terminal connected to the first mounting board (32), is connected to the first switching element (9) in series, and is configured to limit an electric current of the first switching element (9). The second switching element (11) is connected to the current control element (10) in series. An electric current flows to the second switching element (11) when the first switching element (9) is off.

## Description

### FIELD

Embodiments described herein relate generally to a power supply device and a luminaire.

### BACKGROUND

In recent years, in a luminaire, as an illumination light source, an incandescent lamp and a fluorescent lamp are replaced with energy-saving and long-life light sources such as a light-emitting diode (LED). For example, new illumination light sources such as an EL (Electro-Luminescence) and an organic light-emitting diode are also developed.

The brightness of the illumination light sources depends on a value of a flowing electric current. In order to stably light the luminaire, a power supply device of a constant current output type is necessary. It is necessary to convert a voltage in order to adjust an input power supply voltage to a rated voltage of an illumination light source such as an LED. As a highly efficient power supply suitable for power saving and a reduction in size, there are switching power supplies such as a DC-DC converter of a chopper system.

As switching elements used in the switching power supplies, there are switching elements formed by a wide band gap compound semiconductor. Above all, a high electron mobility transistor (HEMT) formed by a nitride semiconductor such as gallium nitride (GaN) attracts attention. This is because the high electron mobility transistor has a high withstand voltage and a low ON resistance characteristic and can be switched at a high frequency. If ON resistance falls and high-speed switching can be performed, it is possible to reduce the sizes of an inductor and a capacitor configuring an output filter. In order to attain a reduction in the size of the entire power supply device, a reduction in the size of the element itself is also necessary. It is also necessary to simultaneously promote improvement of efficiency taking into account characteristics of the nitride semiconductor.

### BRIEF DESCRIPTION OF THE DRAWINGS

FIG. 1 is a circuit diagram illustrating a luminaire including a power supply device according to a first embodiment;
FIG. 2 is a schematic plan arrangement view of a semiconductor package provided in the power supply device in the first embodiment;
FIGS. 3A and 3B are characteristic diagrams showing a leak current characteristic of a GaN HEMT;
FIG. 4 is a schematic plan arrangement view of a semiconductor package provided in a power supply device according to a second embodiment;
FIG. 5 is a schematic circuit diagram of a semiconductor package;
FIG. 6 is a circuit diagram illustrating a luminaire including a power supply device according to a third embodiment; and
FIG. 7 is a schematic plan arrangement view of a semiconductor package provided in the power supply device in the third embodiment.

### DETAILED DESCRIPTION

In general, according to one embodiment, a power supply device includes a conductive first mounting board, a first switching element, a current control element, and a second switching element. The first switching element is mounted on the first mounting board. The current control element is mounted on the first mounting board, includes a main terminal connected to the first mounting board, is connected to the first switching element in series, and is configured to limit an electric current of the first switching element. The second switching element is connected to the current control element in series. An electric current flows to the second switching element when the first switching element is off.

According to another embodiment, there is provided a luminaire including a power supply device and a lighting load. The power supply device includes a first mounting board, a first switching element, a current control element, and a second switching element. The first mounting board is conductive. The first switching element is mounted on the first mounting board. The current control element is mounted on the first mounting board, includes a main terminal connected to the first mounting board, is connected to the first switching element in series, and limits an electric current of the first switching element. The second switching element is connected to the current control element in series. An electric current flows to the second switching element when the first switching element is off. The lighting load is a load circuit of the power supply device.

Various embodiments will be described hereinafter with reference to the accompanying drawings. In the following explanation, the same members are denoted by the same reference numerals and signs. Explanation of the members once explained is omitted as appropriate.

### First Embodiment

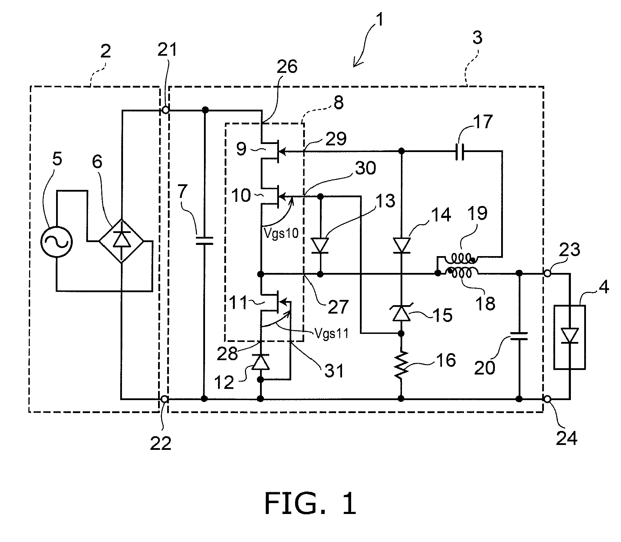

FIG. 1 is a circuit diagram illustrating a luminaire including a power supply device according to a first embodiment.

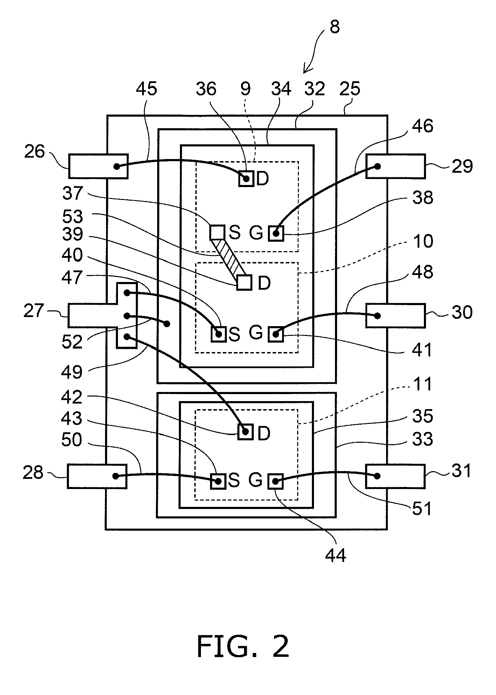

FIG. 2 is a schematic plan arrangement view of a semiconductor package provided in the power supply device in the embodiment.

A luminaire 1 includes a power supply device 3 configured to covert an output voltage of a direct-current voltage source 2 into a desired voltage and a lighting load 4 functioning as a load circuit of the power supply device 3 and supplied with electric power from the power supply device 3 to light. The lighting load 4 includes an illumination light source such as an LED. The direct-current voltage source 2 includes, for example, an alternating-current power supply 5 and a rectifier 6. In FIG. 1, as the direct-current voltage source 2, a direct-current voltage source is shown that rectifies an alternating-current voltage of the alternating-current power supply 5 such as a commercial alternating-current power supply using the rectifier 6 such as a bridge-type rectifier circuit and outputs a direct-current voltage. The power supply device 3 includes an input filter capacitor 7, a semiconductor package 8, diodes 12, 13, and 14, a constant voltage diode 15, a resistor 16, a capacitor 17, inductors 18 and 19, and an output filter capacitor 20. The semiconductor package 8 includes a first switching element 9, a current control element 10, and a second switching element 11. These elements are normally on type transistors formed by a compound semiconductor, for example, high electron mobility transistors (HEMTs) formed by a nitride semiconductor such as gallium nitride (GaN). The diode 12 is, for example, a silicon Schottky barrier diode. The inductor 18 and the inductor 19 are magnetically coupled.

In this specification, the "nitride semiconductor" includes semiconductors having all compositions obtained by changing composition ratios x, y, and z within ranges of the composition ratios in a chemical formula BxInyAlzGa 1-x-y-zN (0≤x≤1, 0≤y≤1, 0≤z≤1, x+y+z≤1). Further, semiconductors further including group V elements other than N (nitride), semiconductors further including various elements added to control various physical properties such as a conduction type, and semiconductors further including unintentionally-included various elements are also included in the "nitride semiconductor".

An output of the direct-current voltage source 2 is input to between a high-potential input terminal 21 and a low-potential input terminal 22 of the power supply device 3. The input filter capacitor 7 is connected between the high-potential input terminal 21 and the low-potential input terminal 22 of the power supply device 3. The high-potential input terminal 21 of the power supply device 3 is connected to a drain of the first switching element 9. A source of the first switching element 9 is connected to a drain of the second current control element 10. A source of the current control element 10 is connected to a drain of the second switching element 11. A source of the second switching element 11 is connected to a cathode of the diode 12.

An anode of the diode 12 is connected to the low-potential input terminal 22 of the power supply device 3. The drain of the second switching element 11 is connected to one end of the first inductor 18. The other end of the first inductor 18 is connected to one end of the output filter capacitor 20. The other end of the output filter capacitor 20 is connected to a low-potential input terminal of the power supply device 3. One end of the second inductor 19 is connected to the drain of the second switching element 11. The other end of the second inductor 19 is connected to a gate of the first switching element 9 via the capacitor 17. The second inductor 19 is a line in which a voltage for turning on the first switching element 9 is induced when an electric current of the first inductor 18 increases and a voltage for turning off the first switching element 9 is induced when the electric current of the first inductor 18 decreases.

An anode of the diode 14 is connected to the gate of the first switching element 9. A cathode of the diode 14 is connected to the source of the current control element 10. An anode of the diode 13 is connected to a gate of the current control element 10. A cathode of the diode 13 is connected to the source of the current control element 10. A gate of the second switching element 11 is connected to the anode of the diode 12. A cathode of the constant voltage diode 15 is connected to the drain of the second switching element 11. An anode of the constant voltage diode 15 is connected to one end of the resistor 16. The other end of the resistor 16 is connected to the low-potential input terminal 22 of the power supply device 3. The gate of the current control element 10 is connected to the anode of the constant voltage diode 15. An output of the power supply device 3 is extracted to the high-potential output terminal 23 and the low-potential output terminal 24 from both ends of the output filter capacitor 20 and supplied to the lighting load 4.

As shown in FIG. 2, a semiconductor chip 34 and a semiconductor chip 35 are packaged in the semiconductor package 8. FIG. 2 is a plan view schematically showing the internal structure of the semiconductor package 8. Actually, the semiconductor chip 34 and the semiconductor chip 35 are molded by sealing resin 25. The semiconductor chip 34 is mounted on a land (a first mounting board) 32 of a lead frame. The semiconductor chip 35 is mounted on a land (a second mounting board) 33 of the lead frame. The lands 32 and 33 are conductive. The lands 32 and 33 are covered with the sealing resin 25 and packaged.

The semiconductor chip 34 includes the first switching element 9 and the current control element 10. The semiconductor chip 35 includes the second switching element 11. Bonding pads are formed on the semiconductor chips 34 and 35. Bonding pads 36, 39, and 42 respectively correspond to drain electrodes functioning as main terminals of the first switching element 9, the current control element 10, and the second switching element 11. Bonding pads 37, 40, and 43 respectively correspond to source electrodes functioning as main terminals of the first switching element 9, the current control element 10, and the second switching element 11. Further, bonding pads 38, 41, and 44 respectively correspond to gate electrodes functioning as control terminals of the first switching element 9, the current control element 10, and the second switching element 11. Except the bonding pads 37 and 39, the bonding pads are respectively connected to lead frames in the vicinities thereof by bonding wires 45 to 51.

The lead frames are drawn out to the outside as terminals 26 to 31. The drain of the switching element 9 is connected to the terminal 26. The gate of the switching element 9 is connected to the terminal 29. The source of the current control element 10 is connected to the terminal 27. The gate of the current control element 10 is connected to the terminal 30. The drain of the switching element 11 is connected to the terminal 27. The source of the switching element 11 is connected to the terminal 28. The gate of the switching element 11 is connected to the terminal 31.

The source of the switching element 9 is connected to the drain of the current control element 10 by a metal wire 53 formed between pads.

The source of the current control element 10 is electrically connected to the land 32 of the lead frame via a bonding wire 47, a lead frame, and a bonding wire 52.

The operation of the power supply device 3 is explained.

First, the operation of the second switching element 11 and the diode 12 is explained. The second switching element 11 and the diode 12 operate as rectifying means. When a positive voltage is applied to the anode side of the diode 12, the diode 12 conducts. The second switching element 11, which is a normally on type element, is turned on. This state is a state in which a voltage is applied in a forward direction. The rectifying means changes to an ON state. When a negative voltage is applied to the anode side of the diode 12, the diode 12 becomes non-conductive. Since a gate-to-source voltage Vgs11 of the second switching element 11 has a negative value, the second switching element 11 is turned off. This is a state in which a voltage is applied in a backward direction. The rectifying means changes to an OFF state.

When a voltage is applied in the backward direction, a backward voltage applied to the diode 12 is the gate-to-source voltage Vgs11 of the second switching element 11. Since this voltage is a voltage of about several voltage, a low-withstand voltage silicon Schottky barrier diode or the like can be used as the diode 12. In general, the low-withstand voltage silicon Schottky barrier diode has a low forward voltage. A forward voltage at the ON time of the second switching element 11 is also low. Therefore, a forward voltage of the rectifying means as a whole can be set lower than a forward voltage of a GaN diode alone.

The operation of the current control element 10 is explained.

A gate-to-source voltage Vgs10 of the current control element 10 is a negative voltage according to the action of the constant voltage diode 15 and the resistor 16. The current control element 10 has a threshold current corresponding to the gate-to-source voltage Vgs10. When a drain current of the current control element 10 is smaller than the threshold current, the current control element 10 shows low ON resistance. When the drain current exceeds the threshold current, the ON resistance of the current control element 10 suddenly increases. The current control element 10 shows a constant current characteristic.

The operation of the power supply device 3 is explained below with reference to the characteristics of the rectifying means formed by the second switching element 11 and the diode 12 and the current control element 10.
(1) When an output voltage of the direct-current power supply 2 is applied between the high-potential input terminal 21 and the low-potential input terminal 22, the first switching element 9 and the current control element 10 are in the ON state because the elements are the normally on type elements. Then, an electric current flows through a path of the high-potential input terminal 21, the first switching element 9, the current control element 10, the inductor 18, the output filter capacitor 20, and the low-potential input terminal 22. The output filter capacitor 20 is charged. Electromagnetic energy is accumulated in the inductor 18.
(2) Since the first switching element 9 and the current control element 10 are on, an input voltage of the power supply device 3 is applied to both ends of the rectifying means formed by the second switching element 11 and the diode 12. Since a voltage is applied in the backward direction, the rectifying means changes to a non-conduction state.
(3) The electric current flowing through the inductor 18 increases as time elapses. Since the inductor 19 is magnetically coupled with the inductor 18, an electromotive force for setting the side of the capacitor 17 operating as a coupling capacitor to high potential is inducted in the inductor 19. Potential, which is positive with respect to the source, is supplied to the gate of the first switching element 9 via the capacitor 17. The first switching element 9 maintains the ON state.
(4) When the electric current flowing through the inductor 18 exceeds the threshold current of the current control element 10, a drain-to-source voltage of the current control element 10 suddenly increases according to the sudden increase of the ON resistance. A gate-to-source voltage of the first switching element 9 has a negative large value. The first switching element 9 is turned off.
(5) A counter electromotive force is generated in the inductor 18. Since a voltage is applied in the forward direction, the rectifying means formed by the second switching element 11 and the diode 12 changes to the ON state. The electric current continues to flow through a path of the rectifying means, the inductor 18, and the output filter capacitor 20. Since the electromagnetic energy is emitted, the electric current of the inductor 18 decreases. A negative voltage induced in the inductor 19 is maintained. The first switching element 9 maintains the OFF state.
(6) When the electromagnetic energy accumulated in the inductor 18 decreases to zero, the electric current flowing through the inductor 18 decreases to zero. The direction of the electromotive force is reversed again. An electromotive force for setting the capacitor 17 side to high potential is induced in the inductor 19. A voltage higher than the voltage at the source is supplied to the gate of the first switching element 9. The first switching element 9 is turned on. The power supply device 3 returns to the state of (1).

Thereafter, power supply device 3 repeats (1) to (6). The input voltage is converted and supplied to the lighting load 4. In the first embodiment, the power supply device 3 operates as a falling voltage converter. The diodes 13 and 14 respectively limit the potentials of the gates of the first switching element 9 and the current control element 10.

In the HEMT formed by the GaN-based semiconductor, there is a phenomenon called current collapse in which a drain current is affected by a drain-to-source voltage. This is a phenomenon in which the ON resistance of the GaN HEMT rises immediately after a high-voltage is applied thereto. As a measure against this phenomenon, there is a method of electrically connecting a source terminal or a gate terminal of the GaN HEMT to a land of a lead frame.

An effect of the measure is explained using Table 1.

Table 1 is a table illustrating a change in the ON resistance before and after the voltage application to the GaN HEMT. That is, Table 1 represents, with the ON resistance before the voltage application set as a reference, a change in the ON resistance before and after application of a voltage of 500 V between the drain and the source of the GaN HEMT.

**Table 1**

| Connection form of the lead frame land and the terminal | Change in the ON resistance |
|---|---|
| Source terminal is connected | 1.08 times |
| Gate terminal is connected | 1.11 times |
| No terminal is connected | 1.63 times |

It is seen that, when the source or the gate is connected to the land of the lead frame, an increase in the ON resistance is small compared with the increase in the ON resistance that occurs when the source and the gate are not connected to the land of the lead frame. As explained above, in the semiconductor package shown in FIG. 2, the source of the current control element 10 is connected to the land 33 of the lead frame. Consequently, it is possible to reduce the influence of the current collapse concerning the switching element 9 and the current control element 10.

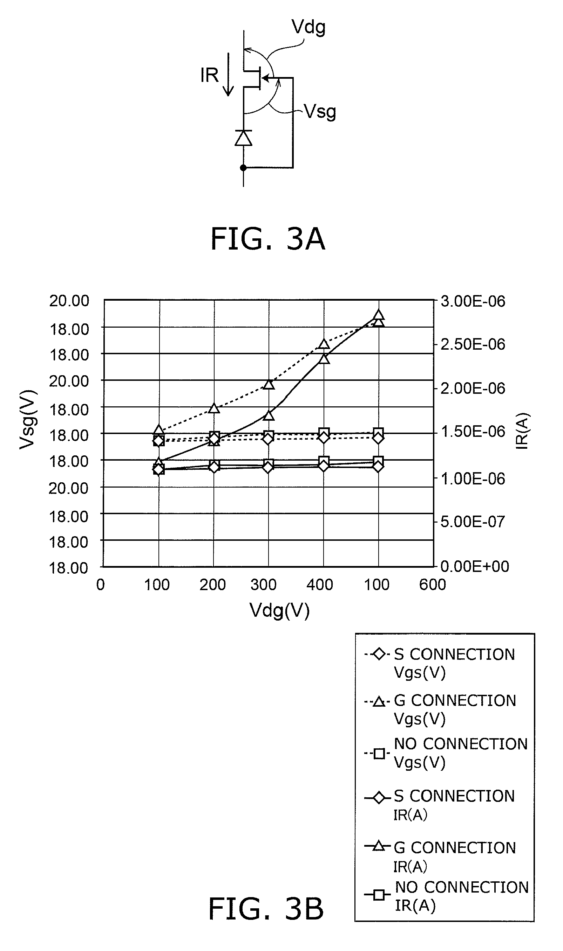

Other effects are explained with reference to FIGS. 3A and 3B.

FIGS. 3A and 3B are characteristic diagrams showing a leak current characteristic of the GaN HEMT.

The abscissa of FIG. 3B indicates a drain-to-gate voltage Vdg of the GaN HEMT obtained when a backward voltage is applied to the rectifying means formed by the GaN HEMT and the diode and changing the GaN HEMT to the OFF state. The first ordinate of FIG. 3B indicates a source-to-gate voltage Vsg and the second ordinate of FIG. 3B indicates a leak current IR.

It is seen that, when the gate is connected to the land of the lead frame, the leak current IR increases according to an increase in the drain-to-gate voltage Vdg. When the leak current IR increases, conversion efficiency of the power supply device 3 is deteriorated. The increase in the leak current IR causes an increase in the source-to-gate voltage Vsg and causes further deterioration in the conversion efficiency. This is because, in order to apply a forward voltage to turn on the GaN HEMT, it is necessary to discharge the source-to-gate voltage Vsg and this discharged power is a loss.

On the other hand, when the source is connected to the land of the lead frame and when both the terminals are not connected, the leak current IR and the source-to-gate voltage Vsg hardly increase.

It is seen from these results that it is possible to cope with both of the current collapse and the leak current by connecting the source of the GaN HEMT to the land of the lead frame.

Effects of the first embodiment are explained. An effect is obtained that it is possible to reduce the size of the power supply device 3 by packaging the first switching element 9, the current control element 10, and the second switching element 11 in one semiconductor package 8. It is possible to reduce the influence of the current collapse and suppress an increase in the ON resistance by connecting the source of the current control element 10 to the land of the lead frame. At the same time, it is possible to suppress an increase in the leak current. Consequently, an effect is also obtained that deterioration in the conversion efficiency is suppressed.

In the embodiment, in the semiconductor package 8, the terminal 27 is provided in a side portion where the terminals 26 and 28 are provided. However, the terminal 27 may be provided in a side portion of the semiconductor package 8 where the terminals 29 to 31 are provided. By providing the terminal 27 in the side portion where the terminals 29 to 31 are provided, it is possible to divide a portion applied with a direct-current voltage or low-frequency pulsation and a portion applied with a high frequency. In the semiconductor package 8, it is possible to secure a creepage distance of insulation and take measures against static electricity for the semiconductor package 8.

### Second Embodiment

A second embodiment is explained.

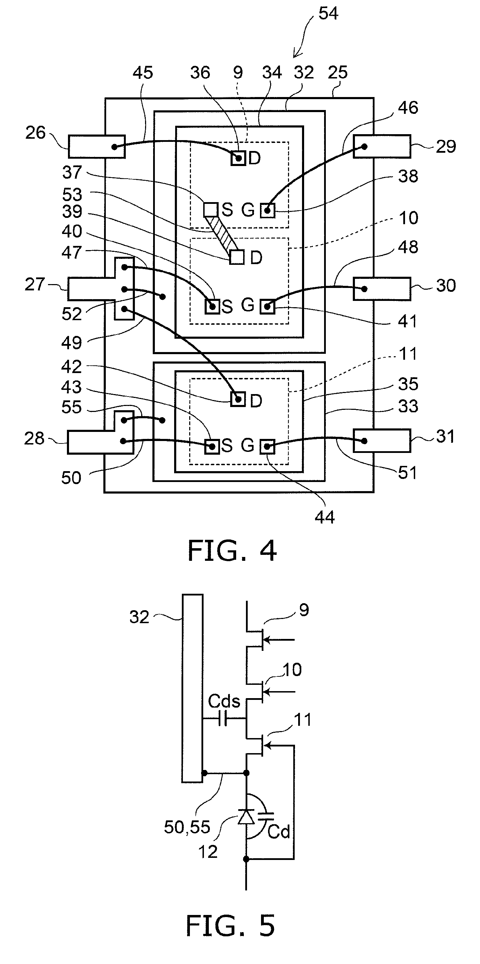

FIG. 4 is a schematic plan arrangement view of a semiconductor package provided in a power supply device according to the second embodiment.

The other portions of the power supply device according to the second embodiment can be the same as the portions in the first embodiment.

In a semiconductor package 54 of the power supply device in the embodiment, connection by a bonding wire 55 is added to the semiconductor package 8 in the first embodiment. The source of the second switching element 11 is electrically connected to the land 33 of the lead frame via a bonding wire 50, the lead frame, and the bonding wire 55. As it is evident from FIG. 4, the land 32 and the land 33 are separated.

Since the source of the second switching element 11 is connected to the land 33 of the lead frame, it is possible to reduce the influence of the current collapse and the leak current on the second switching element 11 as well.

A structure is also conceivable in which the first switching element 9, the current control element 10, and the second switching element 11 are arranged on a single land and the source of the second switching element 11 is connected to the land rather than the source of the current control element 10. However, in this structure, a problem explained below occurs.

Since the source of the second switching element 11 is connected to the single land, a large capacity is connected between the drain and the source of the second switching element 11. This state is shown in FIG. 5.

FIG. 5 is a schematic circuit diagram of the semiconductor package.

The first switching element 9, the current control element 10, and the second switching element 11 are arranged on the land 32. The source of the second switching element 11 is connected to the land 32 via the bonding wires 50 and 55. Cds represents a capacity obtained by adding up a drain-to-source capacity and a drain-to-land capacity of the second switching element 11 connected in parallel. Cd represents the capacity of the diode 12.

Since the land 32 having a large area is connected to the source of the second switching element 11, the capacity Cds has a large value with respect to the capacity Cd. When the first switching element 9 and the current control element 10 are in the ON state, a voltage obtained by dividing an input voltage of the power supply device 3 by the capacity Cds and the capacity Cd is applied to the second switching element 11 and the diode 12. Since the capacity Cds is large with respect to the capacity Cd, a relatively large voltage is applied to the diode 12. It is likely that the voltage exceeds a withstand voltage between the gate and the source of the second switching element 11 and the second switching element 11 is broken.

The land divided into three is examined.

The first switching element 9, the current control element 10, and the second switching element 11 are respectively formed as single semiconductor chips. The semiconductor chips are respectively arranged on the lands and sources of the semiconductor chips are respectively connected to the lands. A problem also occurs in this structure.

Since a high voltage is applied, in the first switching element 9, this structure is effective as a measure against the current collapse and the leak current. On the other hand, as in the switching element 11 shown in FIG. 5, a large capacity is connected between the drain and the source of the first switching element 9. Therefore, a switching operation of the first switching element 9 is delayed.

On the other hand, in the current control element 10, since an applied voltage during the OFF state is low, the current collapse is not a serious problem. There is almost no necessity of connecting the source of the current control element 10 to the land.

Based on the above examination, as explained in the embodiment shown in FIG. 4, the first switching element 9 and the current control element 10 are arranged on the land 32 and the second switching element 11 is arranged on the land 33 different from the land 32. A system for connecting the source of the current control element 10 to the land 32 and connecting the source of the second switching element 11 to the land 33 is considered to be a desirable form.

Effects of the second embodiment are explained.

As in the first embodiment, an effect is obtained that it is possible to reduce the size of the power supply device 3 by packaging the first switching element 9, the current control element 10, and the second switching element 11 in one semiconductor package 8. An effect is also obtained that it is possible to suppress the influence of the current collapse and the leak current not only on the first switching element 9 and the current control element 10 but also on the second switching element 11 and suppress deterioration in conversion efficiency.

In the embodiment, as in the first embodiment, the terminal 27 may be provided in a side portion of the semiconductor package 54 where the terminals 29 to 31 are provided. By providing the terminal 27 in the side portion where the terminals 29 to 31 are provided, it is possible to divide a portion applied with a direct-current voltage or low-frequency pulsation and a portion applied with a high frequency. In the semiconductor package 54, it is possible to secure a creepage distance of insulation and take measures against static electricity for the semiconductor package 54.

### Third Embodiment

A third embodiment is explained.

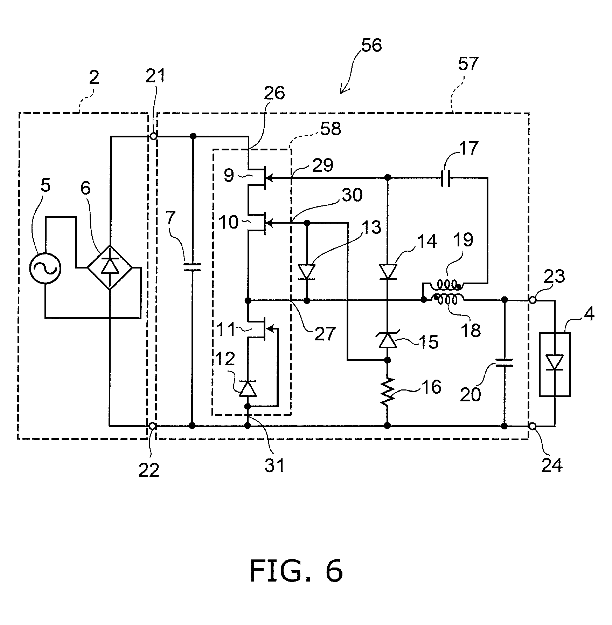

FIG. 6 is a circuit diagram of a luminaire including a power supply device according to the third embodiment.

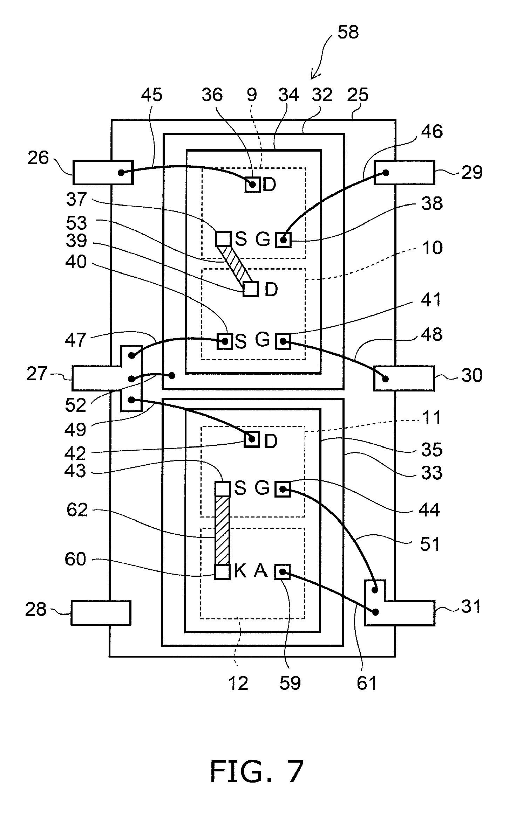

FIG. 7 is a schematic plan arrangement view of a semiconductor package provided in the power supply device in the embodiment.

As shown in FIG. 6, a luminaire 56 includes the direct-current voltage source 2, a power supply device 57, and the lighting load 4.

The power supply device 57 includes the input filter capacitor 7, a semiconductor package 58, the diodes 13 and 14, the constant voltage diode 15, the resistor 16, the capacitor 17, the inductors 18 and 19, and the output filter capacitor 20.

As shown in FIG. 7, the semiconductor package 58 in the embodiment includes the first switching element 9, the current control element 10, the second switching element 11, and the diode 12. The diode 12 is a GaN semiconductor same as the second switching element 11.

A bonding pad 59 corresponds to an anode electrode and a bonding pad 60 corresponds to a cathode electrode. The anode of the diode 12 is connected to the terminal 31 via a bonding wire 61. The source of the switching element 11 is connected to the cathode of the diode 12 by a metal wire 62 formed between the pads.

In the power supply device 57 in the embodiment, the diode 12 is included in the semiconductor package 8 in the power supply device 3 in the first embodiment to form the semiconductor package 58. Otherwise, the power supply device 57 is the same as the power supply device 3 in the first embodiment. The operation of the power supply device 57 is also the same as the operation of the power supply device 3.

Effects of the third embodiment are explained. According to the embodiment, as in the first embodiment, an effect is obtained that it is possible to suppress the influence of the current collapse and the leak current on the first switching element 9 and the current control element 10 and suppress deterioration in conversion efficiency. Since the first switching element 9, the current control element 10, the second switching element 11, and the diode 12 are packaged in one semiconductor package 58, an effect is also obtained that it is possible to further reduce the size of the power supply device 57 than in the first embodiment.

In the embodiment, as in the first and second embodiments, the terminal 27 may be provided in a side portion of the semiconductor package 58 where the terminals 29 to 31 are provided. By providing the terminal 27 in the side portion where the terminals 29 to 31 are provided, it is possible to divide a portion applied with a direct-current voltage or low-frequency pulsation and a portion applied with a high frequency. In the semiconductor package 58, it is possible to secure a creepage distance of insulation and take measures against static electricity for the semiconductor package 58.

The embodiments are explained above with reference to the specific examples. However, the embodiments are not limited to the specific examples and various modifications of the embodiments are possible.

For example, the first switching element 9, the current control element 10, and the second switching element 11 are not limited to the GaN-based HEMT. For example, the first switching element 9, the current control element 10, and the second switching element 11 may be a semiconductor element formed by using a semiconductor having a wide band gap (a wide band gap semiconductor) such as silicon carbide (SiC), gallium nitride (GaN), or diamond as a semiconductor substrate. The wide band gap semiconductor means a semiconductor having a band gap wider than a band gap of gallium arsenide (GaAs) having the band gap of about 1.4 eV. The wide band gap semiconductor includes, for example, a semiconductor having a band gap equal to or wider than 1.5 eV, gallium phosphate (GaP having band gap of about 2.3 eV), gallium nitride (GaN having a band gap of about 3.4 eV), diamond (C having a band gap of about 5.27 eV), aluminum nitride (AlN having a band gap of about 5.9 eV), and silicon carbide (SiC).

The lighting load 4 is not limited to LED and may be, for example, an organic EL (Electro-Luminescence) or an OLED (Organic light-emitting diode).

The embodiments are explained above with reference to the specific examples. However, the embodiments are not limited to the specific examples. That is, examples obtained by those skilled in the art applying design changes to the specific examples are also included in the scope of the embodiments as long as the examples include the characteristics of the embodiments. The components and the arrangement, the materials, the conditions, the shapes, the sizes, and the like of the components included in the specific examples are not limited to those illustrated in the figures and can be changed as appropriate.

The components included in the embodiments can be combined as long as the combination is technically possible. Components obtained by combining the components are also included in the scope of the embodiments as long as the components include the characteristics of the embodiments. Besides, in the category of the idea of the embodiments, those skilled in the art can conceive various modifications and alterations. It is understood that the modifications and the alternations also belong to the scope of the embodiments.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A power supply device (3, 57) comprising:
a conductive first mounting board (32);
a first switching element (9) mounted on the first mounting board (32);
a current control element (10) mounted on the first mounting board (32), including a main terminal connected to the first mounting board (32), connected to the first switching element (9) in series, and configured to limit an electric current of the first switching element (9); and
a second switching element (11) connected to the current control element (10) in series, an electric current flowing to the second switching element (11) when the first switching element (9) is off.

2. The device (3, 57) according to claim 1, further comprising a second mounting board (33) on which the second switching element (11) is mounted,
a main terminal of the second switching element (11) being connected to the second mounting board (33), and
the first mounting board (32) and the second mounting board (33) being separated.

3. The device (3, 57) according to claim 2, wherein the first mounting board (32) and the second mounting board (33) are provided in a same semiconductor package (8, 54, 58).

4. The device (3, 57) according to any one of claims 1 to 3, wherein the first switching element (9) and the current control element (10) are provided in a same semiconductor chip (34).

5. A luminaire (1, 56) comprising:
the power supply device (3, 57) according to any one of claims 1 to 4; and
a lighting load (4) functioning as a load circuit of the power supply device (3, 57).
